# EUROPEAN PATENT APPLICATION

(11) **EP 1 852 657 A1**
(43) Date of publication of application: **07.11.2007**
(21) Application number: 05719506.7
(22) Date of filing: 25.02.2005
(51) Int. Cl.: F23R 3/58, F02C 7/232, F23R 3/02, F23R 3/28

(54) **FUEL INJECTION VALVE, COMBUSTOR USING THE FUEL INJECTION VALVE, AND FUEL INJECTION METHOD FOR THE FUEL INJECTION VALVE**

(71) Applicant: IHI Corporation, Tokyo 135-8710 (JP)
(72) Inventor: Hosoi, Jun, IHI Corporation, Koto-ku Tokyo 135710 (JP); Hiromitsu, N., IHI Corporation, Koto-ku Tokyo 135710 (JP); Yoshida, T., IHI Corporation, Koto-ku Tokyo 135710 (JP)
(74) Representative: Grünecker, Kinkeldey, Stockmair & Schwanhäusser Anwaltssozietät
(86) International application number: PCT/JP2005/003105
(87) International publication number: WO 2006/090466

(57) **Abstract**

A fuel injection valve is provided with a cylindrical injection valve main body in which one end is closed, and a fuel nozzle arranged on a center line of the main body and injecting a fuel. The main body has a plurality of air injection ports for injecting an air to an inner side in a tangential direction and forming a whirl flow in an inner portion in a circumferential direction of a cylinder portion of the main body, and the fuel nozzle has a fuel injection port injecting the fuel toward an inner peripheral surface of the main body.

## Description

### BACKGROUND OF THE INVENTION

### Technical Field of the Invention

The present invention relates to a fuel injection valve used in a combustor such as a gas turbine or the like, a combustor using the same, and a fuel injection method thereof.

### Description of the Related Art

For an environmental protection, it is made compulsory to reduce a nitrogen oxide (NOx) in a combustion exhaust gas of a gas turbine. In our country, it is necessary to make it, for example, equal to or less than 70 ppm in a national standard, and for example, equal to or less than 25 to 30 ppm in a large city (for example, in Tokyo).

A cause that the NOx is generated is mainly constituted by a so-called thermal NOx that a nitrogen in an air is oxidized due to a high-temperature flame at a time of combustion. In order to reduce the thermal NOx, it is effective to reduce a hot spot in the flame, and inhibit the high-temperature flame from being generated. Accordingly, there has been conventionally proposed a low NOx combustor using a premixing type fuel injection valve described below (for example, refer to patent document 1).

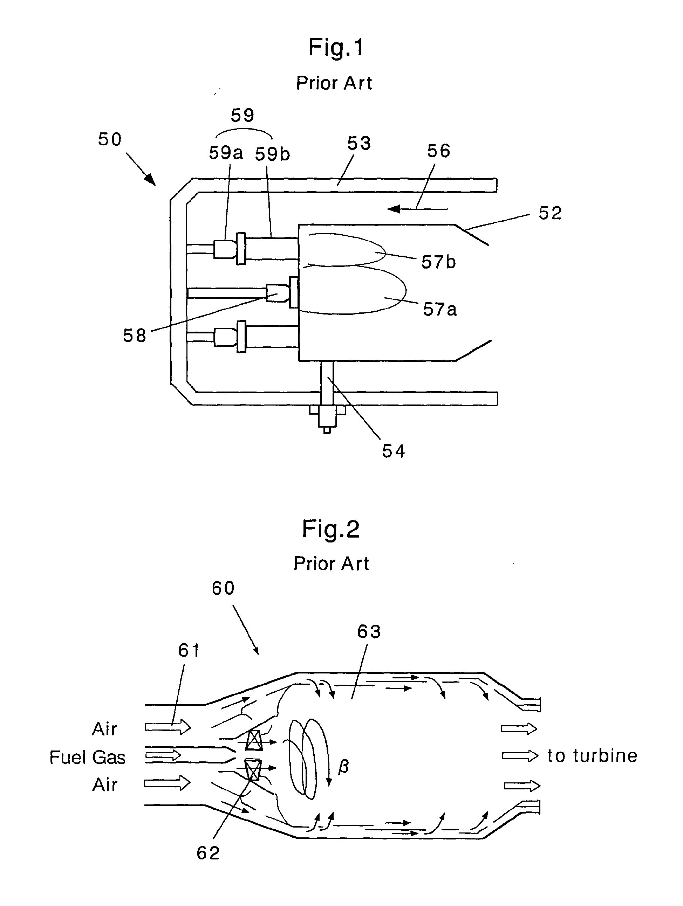

Fig. 1 is a view of a whole structure of a low NOx combustor for a gas turbine provided with a conventional premixing type fuel injection valve. As shown in this drawing, a conventional low NOx combustor 50 is provided with a pilot burner 58 arranged in a center portion, and a plurality of main burners 59 arranged around the pilot burner 58. In this case, in this drawing, reference numeral 52 denotes a combustor liner, reference numeral 53 denotes a casing, and reference 54 denotes an ignition plug (an igniter). An air 56 flows through a portion between the casing 53 and the liner 52 so as to reach burners 58 and 59, and flows into the liner 52 through the burners and the other portions so as to form flames 57a and 57b, and a generated combustion gas is introduced to a gas turbine (not shown) through a scroll portion (not shown) and drive the gas turbine.

Further, in Fig. 1, the main burner 59 is constituted by a main injection valve 59a and a premixing pipe 59b which are coaxially arranged with each other. A fuel is supplied to the main injection valve 59a from an external portion through the casing 53. The fuel is, for example, a gas fuel. The premixing pipe 59b is constituted by a cylindrical tube in which one end portion in this drawing is open, and is structured such that the fuel and the air tend to be mixed with each other in an inner portion. In other words, the main burner 59 is constituted by a premixing lean burner constructed by the main injection valve 59a and the premixing pipe 59b. In accordance with this structure, it is possible to inject the fuel into the premixing pipe 59b by the main injection valve 59a, and it is possible to premix the fuel with a sufficient amount of air within the premixing pipe 59b so as to lean burn the fuel. In the premixing combustion type combustor mentioned above, the structure is made such as to premix the fuel with the sufficient amount of air so as to lean burn the fuel. Accordingly, there is an advantage that a hot spot is not generated, it is possible to prevent a high-temperature flame from being generated, it is possible to achieve a low NOx generation, or the like.

As mentioned above, the conventional combustor such as the gas turbine or the like is frequently structured such as to reduce the NOx by executing a lean premixed combustion.

In other words, the premixing type has been conventionally a mainstream, the premixing type being structured such that a premixing portion is provided so as to uniformly mix the fuel and the air, and the fuel and the air are previously mixed by the premixing portion.

Fig. 2 is a view showing the other example of the conventional lean premixing combustion type low NOx combustor.

In the combustor 60, a swirl vane 62 is provided within a mainstream gas flow path 61 in which a large amount of air flows, thereby introducing an air flowing in an axial direction of the combustor as a spiral flow into a combustion chamber 63, spurting a fuel gas toward an inner side of the combustion chamber, mixing a large amount of air forming the spiral flow with the fuel gas, and igniting the mixed gas so as to execute its combustion.

In other words, it is intended to reduce the NOx generated mainly at a time of burning at a high temperature, by mixing the large amount of air with the combustion gas so as to generate the lean combustion gas, in this example, thereby doing away with the hot spot of the flame.

In this case, if the concentration of the fuel gas becomes lean, it becomes hard to ignite the fuel gas. Accordingly, the structure is made such that a pilot burner executing a flame holding is provided within the combustion chamber in the conventional combustor executing the lean premixing combustion, thereby forming a flame base portion so as to intend to secure a continuous combustion of the lean premixed combustion gas.

However, in the lean premixing combustion type low NOx combustor, there is a problem that it is hard to stably burn the lean fuel gas, and a flashback or an oscillated combustion tend to be generated. There is a problem that in spite that the low NOx can be obtained in accordance with the lean premixing combustion, a CO concentration tends to become higher due to a low flame temperature.

In order to avoid the problems of the lean premixing combustion type, there has been proposed a diffusion combustion type low NOx combustor using a whirl flame (for example, refer to [non-patent document 1]).

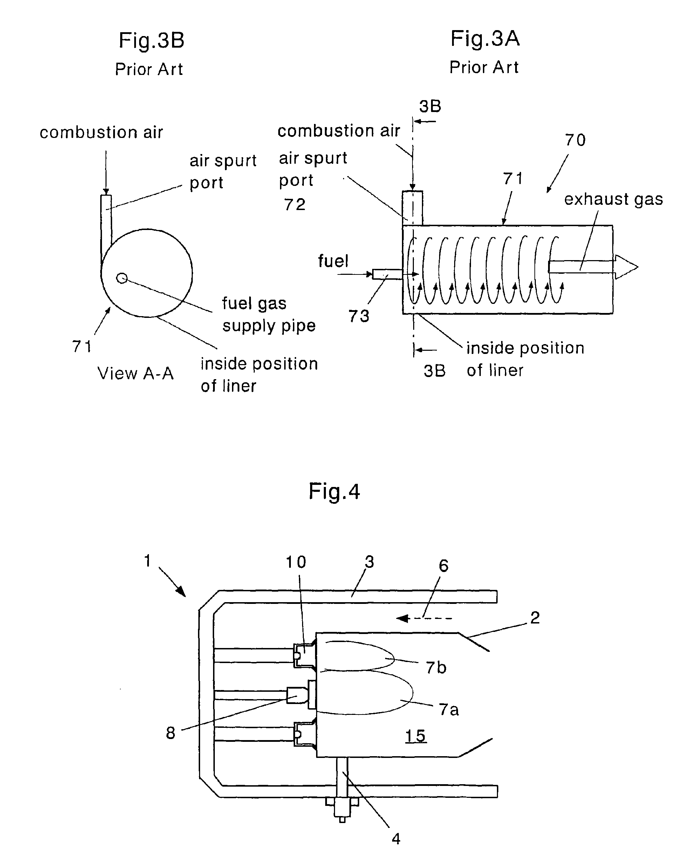

In Asymmetric Whirl Combustion in non-patent document 1, an air is spurted in a tangential direction of a flame tube from an air spurt pipe 72 coupled to a side surface near one end of a cylindrical flame tube 71 having a combustion space in an inner portion so as to form a whirl flow, and a combustion gas is spurted in an axial direction of the flame tube from a fuel gas supply pipe 73 coupled to one end surface of the flame tube, as shown in Figs. 3A and 3B, thereby promoting mixing between the air and the combustion gas and reducing the NOx in the combustion exhaust gas.

This asymmetric whirl combustor 70 is different from the conventional swirl having a high flow rate in the axial direction, in the light that the air flow does not have a component in the axial direction. Accordingly, there are provided with characteristics that the formed whirl flame exhibits a kind of exhaust gas circulating effect, it is possible to achieve the low NOx generation, and it is possible to achieve a high flame holding capacity and a stable combustion.

Patent Document 1: Japanese Unexamined Patent Publication No. 2002-130675

Non-Patent Document 1: H. C. Gabler, et al. "Asymmetric whirl Combustion: A New Approach for Non-Premixed Low NOx Gas Turbine Combustor Design", AIAA-98-3530

However, in the conventional premixing combustion type combustor mentioned above, there is a problem that the flashback, a self-ignition or a combustion oscillation is generated. In other words, as mentioned above, in order to achieve the low NOx in the combustor, it is necessary to execute the premixed combustion. However, since the premixing portion (the pre-evaporation premixing pipe 59b) mixing the air and the fuel, and the combustion region are directly connected by the flow path of the premixed gas, there is a problem that the flame in the combustion region flashes back into the premixing flow path in the case that the flow rate of the premixed gas flowing in the premixing flow path is slower than the combustion speed. Further, even if the flashback is not generated, there is a problem that the premixed gas self ignites within the premixing flow path under a condition that the inlet of the combustor becomes a high temperature and a high pressure. Further, there is a problem that the combustion oscillation is generated if a periodic pressure fluctuation is generated within the combustor on the basis of the combustion, and a phase of a fluctuation of a heat generation amount within the combustor caused by the pressure fluctuation comes into line with a certain condition. If the combustion oscillation is generated, a high cycle oscillation and a noise are generated due to the periodic fluctuation of the pressure of the combustor, as well as a fluctuation width of the combustion pressure is amplified and the combustion becomes unstable. For example, since the ignition of the premixed gas injected into the combustor does not become stable in the case that the pilot flame becomes unstable, the combustion state of the injected premixed gas is fluctuated. Accordingly, the periodic pressure fluctuation is generated within the combustor so as to tend to develop to the combustion oscillation.

The generation of the flashback, the self-ignition and the combustion oscillation in the low NOx combustor may come to such a severe problem as to cause a burnout of the combustor in some cases. Accordingly, since a compressor ratio of a compressor and a combustor inlet temperature is increased in an aircraft engine, the risk is further increased, thereby generating an obstacle at a time of applying the low NOx combustor provided with the premixing type fuel injection valve to the aircraft engine.

The present invention is made for solving the problem mentioned above. In other words, an object of the present invention is to provide a fuel injection valve which can essentially prevent a flashback, a self-ignition and an oscillated combustion, and can achieve a low NOx generation, a combustor using the fuel injection valve, and a fuel injection method thereof.

### SUMMARY OF THE INVENTION

In accordance with the present invention, there is provided a fuel injection valve comprising:
a cylindrical injection valve main body in which one end is closed; and
a fuel nozzle arranged on a center line of the injection valve main body and injecting a fuel,
wherein the injection valve main body has a plurality of air injection ports for injecting an air to an inner side in a tangential direction and forming a whirl flow in an inner portion in a circumferential direction of a cylinder portion of the injection valve main body, and the fuel nozzle has a fuel injection port injecting the fuel toward an inner peripheral surface of the injection valve main body.

In accordance with the structure in accordance with the present invention mentioned above, since the structure is made such that a strong whirl flow is formed by injecting the air to the inner side in the tangential direction from the air injection port provided in the injection valve main body, and the fuel is injected to the outer side, that is, the inner peripheral surface of the injection valve main body from the fuel nozzle arranged on the center line of the injection valve main body, the fuel coming into collision with the inner peripheral surface is atomized in a moment of time by the air (the strong whirl flow) injected from the air injection port, and it is possible to rapidly mix the fuel. Accordingly, it is possible to effectively prevent the flashback, the self-ignition and the oscillated combustion from being generated without necessity of the provision of the premixing portion such as the conventional premixing type fuel injection valve, and it is possible to achieve the low NOx combustion.

Further, it is preferable that the fuel injection port is arranged in such a manner as to inject the fuel toward a portion between the air injection ports which are adjacent to each other.

By employing the structure mentioned above, since the injected fuel is atomized by the strong whirl flow mentioned above in a strong shear field region formed near the outer peripheral portion of the injection valve main body, the mixing of the fuel is promoted, it is possible to securely achieve the rapid mixing, and it is possible to improve a suppressing force for suppressing the generation of the flashback, the self-ignition and the combustion oscillation.

Further, it is preferable that the fuel nozzle has a diffusion injection port for diffusion injecting the fuel from the center line of the injection valve main body.

By employing the structure mentioned above, it is possible to secure the stable combustion even under the condition that the combustion becomes comparatively unstable such as the ignition time, the low load time or the like, by diffusion injecting the fuel from the diffusion injection port and assisting the combustion of the air-fuel mixture generated by the rapid mixing.

Further, in accordance with the present invention, there is provided a combustor comprising:
a combustor forming a flame,
wherein the fuel injection valve is provided in an upstream side of the combustion chamber.

Since the combustor in accordance with the present invention is provided with the fuel injection valve rapidly mixing the fuel on the basis of the strong whirl flow, it is possible to effectively prevent the flashback, the self-ignition and the combustion oscillation from being generated, and it is possible to achieve the low NOx combustion.

As described above, in accordance with the present invention, since the structure is made such that a strong whirl flow is formed by injecting the air to the inner side in the tangential direction from the air injection port provided in the injection valve main body, and the fuel is injected to the outer side, that is, the inner peripheral surface of the injection valve main body from the fuel nozzle arranged on the center line of the injection valve main body, the fuel coming into collision with the inner peripheral surface is atomized in a moment of time by the air (the strong whirl flow) injected from the air injection port, and it is possible to rapidly mix the fuel. Accordingly, there can be obtained excellent effects that it is possible to effectively prevent the flashback, the self-ignition and the oscillated combustion from being generated without necessity of the provision of the premixing portion such as the conventional premixing type fuel injection valve, and it is possible to achieve the low NOx combustion.

Further, in accordance with the present invention, there is provided a fuel injection valve comprising:
a hollow cylindrical injection valve main body in which one end is open to a combustion chamber and the other end is closed; and
a fuel injection nozzle attached onto a center line of the closed other end of the injection valve main body and injecting a fuel together with the air,
wherein the injection valve main body has a plurality of air introduction ports introducing a combustion air to an inner side in a tangential direction and forming a strong whirl flow in an inner portion near an inner wall of the cylinder portion, and the strong whirl flow forms a strong shear region in an outer peripheral portion causing a flame expansion by the strong whirl flow and a rigid vortex region in a center portion.

Further, in accordance with the present invention, there is provided a combustor comprising:
a combustion chamber forming a flame,
wherein the fuel injection valve is provided in an upstream of the combustion chamber.

Further, in accordance with the present invention, there is provided a fuel injection method comprising the steps of:
injecting a fuel independently or together with an air into a hollow cylindrical injection valve main body in which one end is open to a combustion chamber and the other end is closed;
introducing a combustion air to an inner side in a tangential direction and forming a strong whirl flow in an inner portion near an inner wall of a cylinder portion of the injection valve main body; and
forming a strong shear region in an outer peripheral portion causing a flame expansion by the strong whirl flow and a rigid vortex region in a center portion.

In accordance with a preferable embodiment of the present invention, the method further comprises the steps of:
injecting the fuel to the strong shear region so as to promote the mixing of the air and the fuel on the basis of a strong turbulence;
forming a uniform lean air-fuel mixture by preventing the flame from being formed in the mixed region on the basis of a flame-out action caused by the flame expansion applied thereto; and
forming a stable flame and hold the flame by a backflow region formed in the center portion by the rigid vortex region.

In accordance with the method and the apparatus in accordance with the present invention mentioned above, it is possible to achieve the low NOx combustion by the uniform lean air-fuel mixture close to the premixed combustion formed in the strong shear region, it is possible to prevent the flashback and the self-ignition in the air/fuel mixed portion such as the premixed combustion even under the high temperature and high pressure condition, on the basis of the flame-out action caused by the flame expansion generated in the mixed region, and it is possible to prevent the burnout of the combustor and the increase of the NOx.

Further, the stable flame in the center portion of the injection valve formed in the backflow region comes to a flame holding source of the low NOx flame close to the premixed flame formed in the outer peripheral portion, and it is possible to maintain the stable combustion without provision of the pilot burner or the like.

Therefore, it is possible to essentially prevent the flashback, the self-ignition and the oscillated combustion on the basis of the flame-out action caused by the flame expansion generated in the mixed region, and it is possible to achieve the low NOx generation.

### BRIEF DESCRIPTION OF THE DRAWINGS

Fig. 1 is a schematic view of a whole structure of a conventional fuel injection valve and a combustor provided with the fuel injection valve;
Fig. 2 is a schematic view of a conventional lean premixed combustion type low NOx combustor;
Figs. 3A and 3B are schematic views of a conventional asymmetric whirl combustion type low NOx combustor;
Fig. 4 is a schematic view of a whole structure of a combustor provided with a fuel injection valve in accordance with the present invention;
Fig. 5A is a schematic view of an embodiment of the fuel injection valve in accordance with the present invention;
Fig. 5B is a view as seen from an arrow 5B-5B in Fig. 5A;
Fig. 6 is a view showing a speed distribution in a radial direction of a speed component in a circumferential direction of a strong whirl flow;
Fig. 7 is a fuel injection valve in accordance with the other embodiment in accordance with the present invention;
Figs. 8A and 8B are views of an embodiment of a low NOx injection valve in accordance with the present invention; and
Figs. 9A, 9B and 9C are views explaining an operation of the low NOx injection valve in accordance with the present invention.

### DESCRIPTION OF THE PREFERRED EMBODIMENT

A description will be in detail given below of preferable embodiments in accordance with the present invention with reference to the accompanying drawings. In this case, the same reference numerals are attached to the portions which are in common in the drawings, and an overlapping description will be omitted.

Fig. 4 is a schematic view of a whole structure of a combustor provided with a fuel injection valve in accordance with the present invention. A combustor 1 shown in Fig. 4 is provided with a pilot burner 8 arranged in an upstream side and a center portion of a combustion chamber 15, and a plurality of (for example, six) fuel injection valves 10 (main burners) arranged on a concentric circle of the pilot burner. In this case, in the drawing, reference numeral 2 denotes a combustor liner, reference numeral 3 denotes a casing, and reference numeral 4 denotes an ignition plug (an igniter). In accordance with the structure, an air 6 flows between the casing 3 and the liner 2 so as to reach the pilot burner 8 and the fuel injection valve 10, and flows into the combustion chamber 15 through the fuel injection valve 10 and the other portions so as to form flames 7a and 7b, and a combustion gas generated in the combustor 15 is introduced to a gas turbine (not shown) through a scroll portion (not shown), and drives the gas turbine.

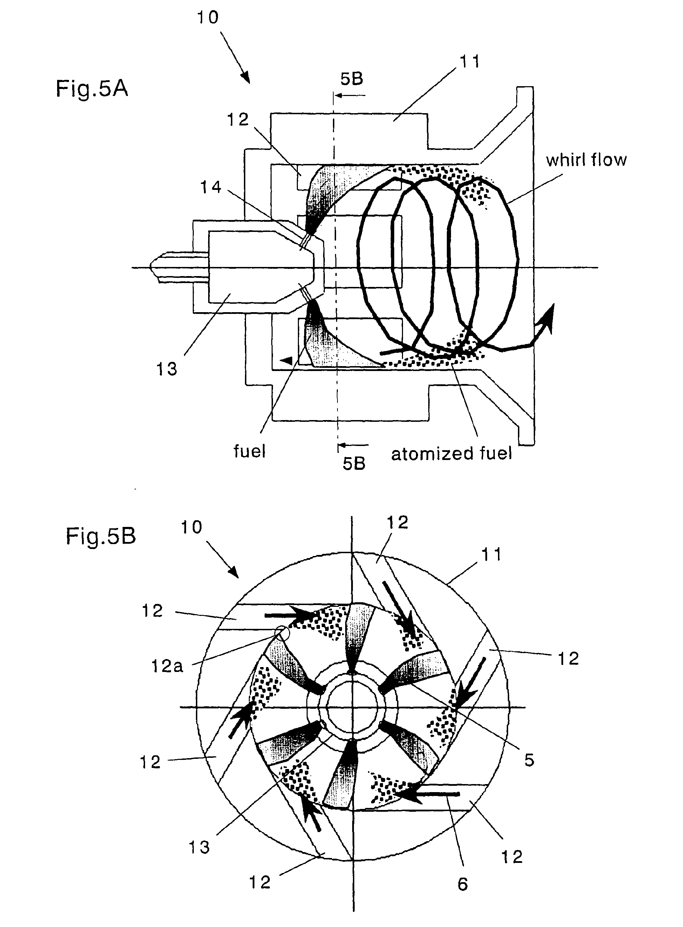

The fuel injection valve 10 is structured such as to rapidly mix a fuel 5 and the air 6 on the basis of a strong whirl flow so as to burn within the combustion chamber 15. Fig. 5A is a schematic view of an embodiment of the fuel injection valve 10 in accordance with the present invention, and Fig. 5B is a view as seen from an arrow 5B-5B of the embodiment. As shown in these drawings, the fuel injection valve 10 is provided with a cylindrical injection valve main body 11 in which one end portion (a rear end portion) is closed, and a fuel nozzle 13. The other end portion (a front end portion) of the injection valve main body 11 has an opening which is bent to an outer side in a radial direction. Further, the injection valve main body 11 has six air injection ports 12 along a peripheral direction in an outer periphery, and the air injection port 12 is structured such as to inject the air in a tangential direction from an outer portion of the injection valve to an inner portion of the injection valve, and form a strong whirl flow in the inner portion of the injection valve. In this case, in the present embodiment, six air injection ports 12 are provided, however, the structure is not limited to this, but the air injection ports 12 can be arranged in a less number or a more number. The fuel nozzle 13 is arranged on a center line of the injection valve main body 11, and has a fuel injection port 14 injecting the fuel toward the inner peripheral surface of the injection valve main body 11. Further, the fuel nozzle 13 is structured such as to inject the fuel 5 toward a portion between the air injection ports 12 which are adjacent to each other.

If the fuel 5 is injected toward the inner peripheral surface of the injection valve main body 11 from the fuel injection port 14 of the fuel nozzle 13, the fuel 5 comes into collision with the inner wall so as to form a fuel liquid film. On the other hand, the air introduced from the air injection port 12 forms the strong whirl flow in the inner portion of the injection valve. Further, the fuel liquid film is atomized by the strong whirl flow in a lip portion 12a in an outlet of the air injection port 12.

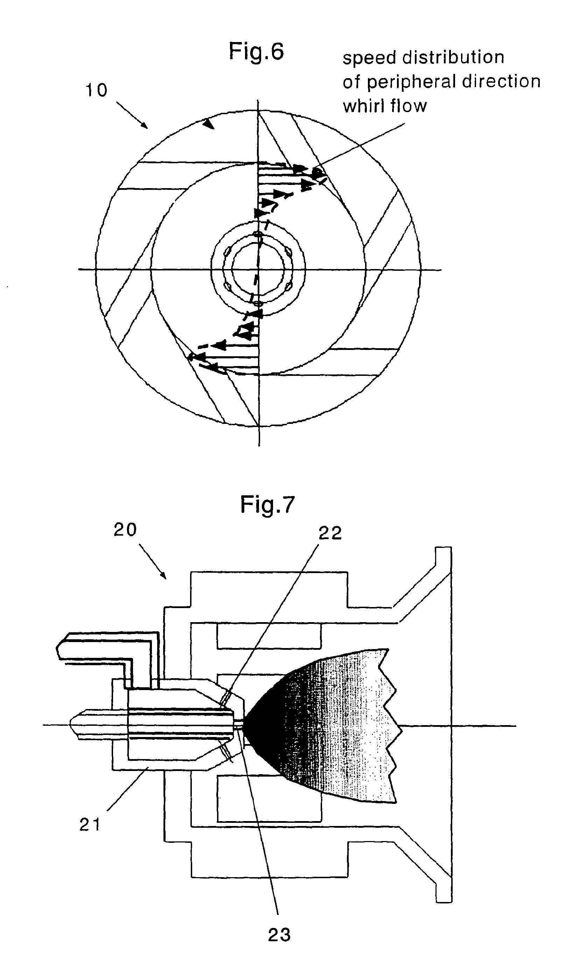

In this case, Fig. 6 shows a speed distribution in a radial direction of a speed component in a peripheral direction of the strong whirl flow formed in the case of injecting the air from the air injection port 12, in the fuel injection valve 10 in accordance with the present invention. As is apparent from Fig. 6, the speed distribution in the radial direction comes to a distribution having a large speed gradient near an outer peripheral portion within the injection valve main body 11, and this region comes to a strong shear field. Accordingly, the fuel 5 atomized by the lip portion 12a in an outlet of the air injection port 12 is just supplied to the strong shear field, it is possible to promote an atomization and a mixing on the basis of the strong shear, and it is possible to form a uniform air-fuel mixture for a short time even in a comparatively small volume. The air-fuel mixture makes progress toward the combustion region while whirling at a high speed together with the strong whirl flow, and forms the flame in the combustion region.

At this time, in the air-fuel mixture making progress together with the strong whirl flow, since an absolute speed is higher than a combustion speed, there is no risk that a flashback is generated. Further, since a mixing region and a mixing time are short, there is no risk that a self-ignition is generated, and it is possible to inhibit a combustion oscillation from being generated. In other words, it is possible to achieve the low NOx combustion as well as it is possible to prevent the flashback and the self-ignition from being generated, and it is possible to reduce the generation of the combustion oscillation, without setting the long premixing portion as in the conventional premixing type fuel injection valve.

In this case, the combustor in accordance with the present embodiment is provided with the pilot burner 8, however, since the combustion of the flame is stabilized in accordance with the present invention as mentioned above, it is not necessary that the pilot burner 8 is provided.

Fig. 7 is a schematic view of a fuel injection valve 20 in accordance with a second embodiment of the present invention. In the present embodiment, a diffusion injection port 23 diffusion injecting the fuel is provided in addition to the same fuel injection port 22 as the first embodiment, in a front end of the fuel nozzle 21 positioned on the center line of the injection valve main body. Since the other structures are the same as the first embodiment mentioned above, a description thereof will be omitted. By employing the structure mentioned above, it is possible to execute a more stable combustion by diffusion injecting the fuel from the diffusion injection port so as to assist the combustion of the air-fuel mixture in accordance with the rapid mixing, even under a condition that the combustion becomes comparatively unstable, for example, the ignition time, the low load time and the like, without necessity of the provision of the pilot burner as in the first embodiment.

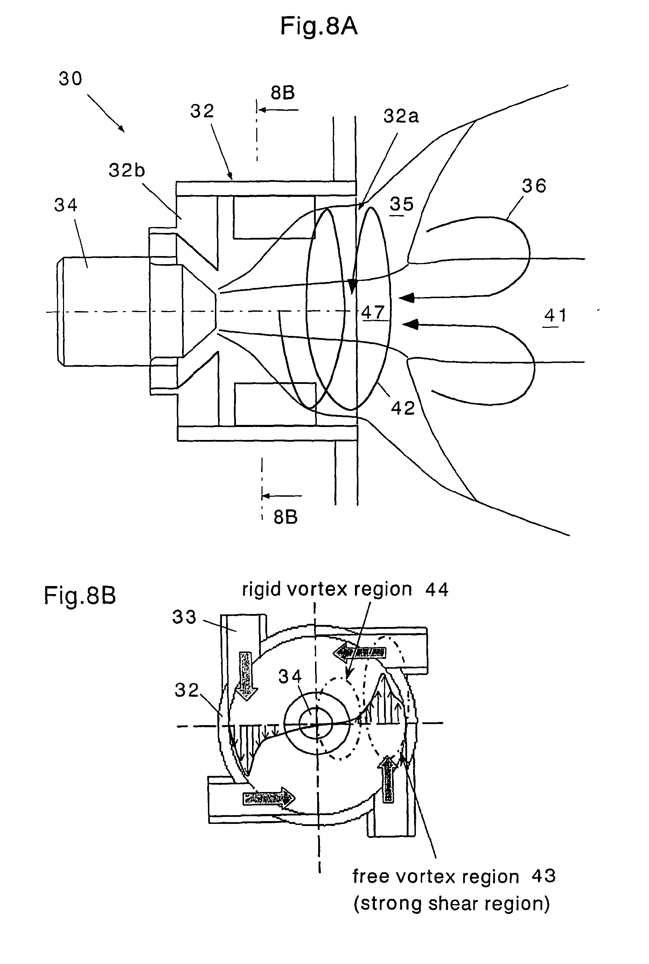

Figs. 8A and 8B are views of an embodiment of a low NOx injection valve in accordance with a third embodiment of the present invention. In these drawings, Fig. 8A is a horizontal cross sectional view and Fig. 8B is a cross sectional view along a line 8B-8B. As shown in these drawings, a fuel injection valve 30 in accordance with the present invention is provided with an injection valve main body 32 and a fuel injection nozzle 34.

The injection valve main body 32 is constituted by a hollow cylindrical member in which one end 32a is open to a combustion chamber 41, and the other end 32b is closed. The injection valve main body 32 is provided with a plurality of (four in the embodiment) air introduction ports 33 near an inner wall of the cylinder portion, and forms a strong whirl flow 42 in an inner portion by introducing the combustion air to an inner side in a tangential direction. On the basis of the strong whirl flow 42, as shown in Fig. 8B, there is formed a strong shear region 43 causing a flame expansion in an outer peripheral portion, and a rigid vortex region 44 in a center portion.

The fuel injection nozzle 34 is constituted by a nozzle which is attached onto a center line of the closed other end 32b of the injection valve main body 32, and injects the fuel together with the air.

In accordance with this structure, it is possible to form a uniform lean air-fuel mixture 35 close to the premixed combustion in the strong shear region 43. Further, it is possible to form a circulating flow 36 in which the combustion gas circulates to the center portion, by the rigid vortex region 44 in the center portion, and it is possible to form a stable flame holding source 47 in the rigid vortex region 44.

In this case, the air introduced from the air introduction port 33 is preferably structured such that a flow rate and a flow speed are set such that the uniform lean air-fuel mixture 35 and circulating flow 36 are formed by the strong shear region 43 and the rigid vortex region 44.

Further, a fuel injection method in accordance with the present invention uses the low NOx injection valve 30 mentioned above, injects the fuel independently or together with the air into the hollow cylindrical injection valve main body 32 in which one end is open to the combustion chamber 41 and the other end is closed, introduces the combustion air to the inner side in the tangential direction close to the inner wall of the cylinder portion of the injection valve main body 32 so as to form the strong whirl flow 42 in the inner portion, and forms the strong shear region 43 in the outer peripheral portion which cause the flame expansion by the strong whirl flow 42 and a rigid vortex region 44 in the center portion.

In more detail, the method injects the fuel to the strong shear region 43 so as to promote the mixing between the air and the fuel on the basis of the strong turbulence, forms the uniform lean air-fuel mixture 35 while preventing the flame formation in the mixing region 43 on the basis of the flame-out action caused by the flame expansion applied thereto, and forms the stable flame holding source 47 by the circulating flow 36 formed in the center portion by the rigid vortex region 44 so as to hold the flame.

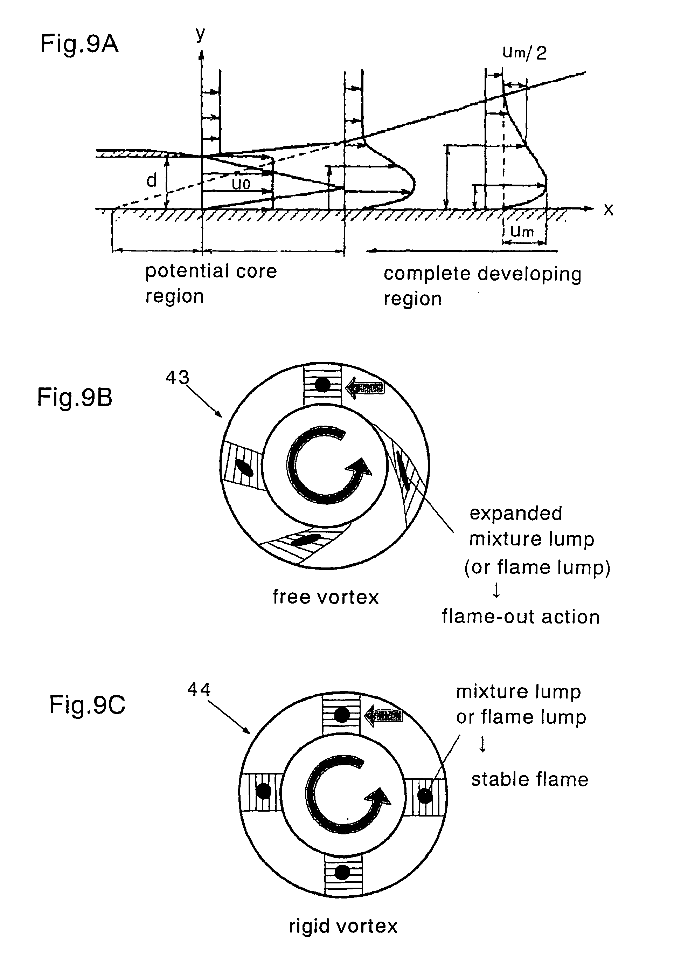

Figs. 9A, 9B and 9C are views explaining an operation of the low NOx injection valve in accordance with the present invention. In these drawings, Fig. 9A is a schematic view showing a developing state of a jet flow along a wall surface, Fig. 9B is a schematic view of the strong shear region 43, and Fig. 9C is a schematic view of the rigid vortex region 44.

In Fig. 9A, a speed distribution of a center portion of the jet flow just after flowing from the nozzle along the wall surface is uniform, however, this uniform speed portion is eaten away by a boundary layer developing from both sides so as to be reduced, and disappears at a certain distance. This portion is formed in a wedge shape, and is called as a potential core. Further, the distributions of the speed and the turbulence are changed even in a complete developing region after the potential core disappears, and the distribution shapes become similar in a sufficiently downstream side. A length of the potential core is about 5 to 8 d in the case that a height or a diameter of the nozzle is set to d.

The potential core region or the complete developing region in the strong whirl flow is divided into a region (Fig. 9B) having a free vortex nature and a region (Fig. 9C) having a forced vortex nature on the boundary of the peak of the speed, and the mixing is significantly promoted by the shear in the free vortex region (the strong shear region 43). Accordingly, if the fuel is injected to the region, the flame expansion is generated, and there is applied the flame-out action that the flame lump is cooled for a short time, whereby it is possible to prevent the ignition.

Further, in the region (the rigid vortex region 44) having the forced vortex nature, the formed whirl flame exhibits a kind of exhaust gas circulating effect, it is possible to achieve both the low NOx generation, and the reduction of the CO generating amount, the flame keeping characteristic is high, and the stable combustion can be executed.

As mentioned above, in accordance with the method and the apparatus on the basis of the present invention, it is possible to achieve the low NOx combustion by the uniform lean air-fuel mixture 35 which is close to the premixed combustion formed in the strong shear region 43. Further, it is possible to prevent the flashback and the self-ignition in the air/fuel mixing portion such as the premixed combustion even under the high temperature and high pressure condition, on the basis of the flame-out action caused by the flame expansion generated in the mixing region 43, and it is possible to prevent the burnout of the combustor and the increase of NOx.

Further, the stable flame in the center portion of the injection valve formed in the backflow region 36 comes to the flame holding source 47 of the low NOx flame which is close to the premixed flame formed in the outer peripheral portion, and it is possible to maintain the stable combustion without setting the pilot burner or the like.

Accordingly, on the basis of the flame-out action caused by the flame expansion generated in the mixing region, it is possible to essentially prevent the flashback, the self-ignition and the oscillated combustion, and it is possible to achieve the low NOx generation.

In this case, it goes without saying that the present invention is not limited to the embodiments mentioned above, but can be variously modified within the scope of the present invention.

## Claims

1. A fuel injection valve comprising:
a cylindrical injection valve main body in which one end is closed; and
a fuel nozzle arranged on a center line of the injection valve main body and injecting a fuel,
wherein the injection valve main body has a plurality of air injection ports for injecting an air to an inner side in a tangential direction and forming a whirl flow in an inner portion in a circumferential direction of a cylinder portion of the injection valve main body, and the fuel nozzle has a fuel injection port injecting the fuel toward an inner peripheral surface of the injection valve main body.

2. The fuel injection valve as claimed in claim 1, wherein the fuel injection port is arranged in such a manner as to inject the fuel toward a portion between the air injection ports which are adjacent to each other.

3. The fuel injection valve as claimed in claim 1 or 2, wherein the fuel nozzle has a diffusion injection port for diffusion injecting the fuel from the center line of the injection valve main body.

4. A fuel injection valve comprising:
a hollow cylindrical injection valve main body in which one end is open to a combustion chamber and the other end is closed; and
a fuel injection nozzle attached onto a center line of the closed other end of the injection valve main body and injecting a fuel independently or together with the air,
wherein the injection valve main body has a plurality of air introduction ports introducing a combustion air to an inner side in a tangential direction and forming a strong whirl flow in an inner portion near an inner wall of the cylinder portion, and the strong whirl flow forms a strong shear region in an outer peripheral portion and a rigid vortex region in a center portion causing a flame expansion.

5. A combustor comprising:
a combustion chamber forming a flame,
wherein the fuel injection valve as claimed in any one of claims 1 to 4 is provided in an upstream of the combustion chamber.

6. A fuel injection method comprising the steps of:
injecting a fuel together with an air into a hollow cylindrical injection valve main body in which one end is open to a combustion chamber and the other end is closed;
introducing a combustion air to an inner side in a tangential direction and forming a strong whirl flow in an inner portion near an inner wall of a cylinder portion of the injection valve main body; and
forming a strong shear region in an outer peripheral portion and a rigid vortex region in a center portion causing a flame expansion by the strong whirl flow.

7. The fuel injection method as claimed in claim 6, wherein the method further comprises the steps of:
injecting the fuel to the strong shear region so as to promote the mixing of the air and the fuel on the basis of a strong turbulence;
forming a uniform lean air-fuel mixture by preventing the flame from being formed in the mixed region on the basis of a flame-out action caused by the flame expansion applied thereto; and
forming a stable flame and hold the flame by a backflow region formed in the center portion by the rigid vortex region.
